# EUROPÄISCHE PATENTSCHRIFT

(11) **EP 0 817 802 B1**
(45) Veröffentlichungstag und Bekanntmachung des Hinweises auf die Patenterteilung: **12.01.2000**
(21) Anmeldenummer: 96908076.1
(22) Anmeldetag: 20.03.1996
(51) Int. Cl.: C08B 1/00, C08J 3/09, D01F 2/00

(54) **VERFAHREN ZUR HERSTELLUNG VON CELLULOSELÖSUNGEN IN WASSERHALTIGEN TERTIÄREN AMIN-N-OXIDEN**
METHOD OF PRODUCING SOLUTIONS OF CELLULOSE IN WATER-CONTAINING TERTIARY-AMIN-N-OXIDES
PROCEDE DE FABRICATION DE SOLUTIONS DE CELLULOSE DANS DES N-OXYDES D'AMINES TERTIAIRES HYDRATES

(30) Priorität: 31.03.1995 DE 19512052
(43) Veröffentlichungstag der Anmeldung: 14.01.1998
(73) Patentinhaber: Akzo Nobel N.V., 6824 BM Arnhem (NL)
(72) Erfinder: CONNOR, Hans-Georg, D-63906 Erlenbach (DE); WACHSMANN, Ulrich, Wigand, D-63820 Elsenfeld (DE); KRÜGER, Richard, Andreas, Georg, D-42349 Wuppertal (DE)
(74) Vertreter: Fett, Günter, Dipl.-Ing.
(86) Internationale Anmeldenummer: EP9601186
(87) Internationale Veröffentlichungsnummer: WO9630410

(56) Entgegenhaltungen:
- DE-A- 2 830 683

## Beschreibung

Die Erfindung betrifft ein Verfahren zur Herstellung einer Lösung von Cellulose in wasserhaltigen tertiären Amin-N-oxiden durch Bereiten einer Cellulose, tertiäre Amin-N-oxide und Wasser enthaltenden Mischung und anschließende Verringerung des Wassergehaltes dieser Mischung.

Eine bekannte Technik der Herstellung von Celluloselösungen, die z.B. in der US-A-4 246 221 oder in der WO 83/04415 beschrieben ist, sieht vor, daß die Cellulose zunächst in einer Mischung aus tertiärem Amin-N-oxid (Löser) und Wasser (Nichtlöser) zu einer Suspension gemischt wird. Hierbei liegt das Wasser im Überschuß, d.h. in einem höheren Anteil vor, als die spätere Celluloselösung aufweisen soll. Durch die Zugabe von Wasser wird ein Aufquellen der Cellulose verbessert. Dies erleichtert die Adsorption von tertiärem Amin-N-oxid auf der Cellulose und unterstützt somit den nachfolgenden Lösevorgang der Cellulose.

Der Lösevorgang wird durch die Entfernung überschüssiger Anteile des Nichtlösers Wasser aus der Suspension unter Wärmezufuhr und Anlegen eines Unterdrucks eingeleitet. Hierbei ist es wichtig, die thermische Belastung der Cellulose möglichst gering, d.h. die Verweilzeit der Cellulosesuspension bzw. -lösung unter hohen Temperaturen möglichst kurz zu halten, um einen unerwünschten Abbau der Cellulose und des tertiären Amin-N-oxids zumindest weitgehend zu vermeiden.

Nach dieser Technik lassen sich relativ hochkonzentrierte Celluloselösungen herstellen, die in hervorragender Weise zu Folien, Membranen, Fäden, Hohlfäden, auch solchen mit semipermeablen Eigenschaften, oder allgemein zu Formteilen auf Cellulosebasis ausgeformt werden können.

Aus der WO 83/04415 ist u.a. die diskontinuierliche Herstellung von Celluloselösungen nach der oben beschriebenen Technik bekannt. Gemäß dieser Schrift werden die Cellulose, tertiäres Amin-N-oxid, Wasser sowie gegebenenfalls Stabilisatoren in einem absatzweise arbeitenden Mischer zu einer Suspension vermischt, wobei der Wassergehalt der Suspension 33,3 % beträgt. Die Suspension wird unter Einwirkung des im Mischer befindlichen Mischaggregats unter einem Vakuum zwischen 90 mbar und 180 mbar auf Temperaturen zwischen 80°C und 100°C erwärmt, und dabei wird überschüssiges Wasser entfernt. Hierbei geht die Cellulose in Lösung; der Wassergehalt der fertigen Celluloselösung beträgt 9 %. Die Verweilzeit der Cellulosesuspension bzw. -lösung im Mischer unter den angegebenen Temperaturen beträgt 2 bis 4 Stunden.

Die in der WO 83/04415 beschriebene diskontinuierliche Verfahrensweise birgt eine Reihe von Nachteilen in sich. So weisen die dort verwendeten Mischer ein - mit zunehmender Grösse der Mischer ausgeprägter werdendes - ungünstiges Verhältnis von Flüssigkeitsoberfläche, d.h. der Fläche, die zur Abdampfung des überschüssigen Wassers zur Verfügung steht, zu Flüssigkeitsvolumen auf. Dies führt zu langen Verweilzeiten der Cellulosesuspension bzw. -lösung im Mischer unter gleichzeitiger Temperatur- und Scherbeanspruchung. Hierdurch besteht verstärkt die Gefahr des unerwünschten Abbaus der Cellulose und des tertiären Amin-N-oxids, was sich wiederum nachteilig auf verschiedene Eigenschaften der Endprodukte auswirken kann, z.B. auf die mechanischen Eigenschaften von aus solchen Lösungen hergestellten Fäden.

Darüberhinaus ist mit zunehmendem Volumen solcher Mischer ein größer werdender Gradient zwischen der Temperatur der im Mischer befindlichen Mischung und dem im Heizmantel des Mischers strömenden Heizmedium notwendig, um den erforderlichen Wärmeeintrag zum Verdampfen des überschüssigen Wassers zu gewährleisten. Hieraus resultiert, daß der jeweils an der beheizten Außenwand des Mischers sich befindende Anteil der Cellulosesuspension bzw. -lösung eine zunehmende Temperaturbelastung erfährt, was wiederum eine erhöhte Schädigung der Cellulose zur Folge hat.

Die EP-A-356 419 beschreibt ein Verfahren zur kontinuierlichen Herstellung von Lösungen von Cellulose in wasserhaltigen tertiären Amin-N-oxidlösungen. Gemäß dieser Schrift wird eine Suspension aus Cellulose, tertiärem Amin-N-oxid und Wasser kontinuierlich über eine Heizfläche schicht- bzw. filmartig ausgebreitet und transportiert, wobei unter Wärmezufuhr und vermindertem Druck überschüssiges Wasser aus der Suspension abgedampft und die Suspension in eine Lösung überführt wird.

Die so beschriebene Herstellung der Celluloselösungen erfolgt in aufwendigen Apparaturen, die aus evakuierbaren und beheizbaren zylindrischen Rührgefässen mit einem zentrisch angeordneten Rotor, der mit einstellbaren Rührschaufeln versehen ist, bestehen. Die Komplexität derartiger Apparaturen, deren Aufbau dem eines Dünnschichtverdampfers entspricht, hat neben hohen Gestehungskosten auch eine hohe Störanfälligkeit zur Folge. Auch eine flexible Anpassung der Apparateparameter an veränderte Prozeßerfordernisse ist nur in eingeschränktem Maße möglich. Darüberhinaus ist ein erhöhter Energieaufwand für den Betrieb insbesondere der relativ schnellaufenden Rotoren erforderlich, um die notwendige Scherung der möglichst dünnen Schichten bzw. Filme zu erreichen.

Es ist daher Aufgabe der vorliegenden Erfindung, ein verbessertes Verfahren zur schonenden und kostengünstigen Herstellung von Celluloselösungen in wasserhaltigen tertiären Amin-N-oxiden durch Bereiten einer Cellulose, tertiäre Amin-N-oxide und Wasser enthaltenden Mischung und anschließende Verringerung des Wassergehaltes dieser Mischung zur Verfügung zu stellen, das die genannten Nachteile des Stands der Technik nicht mehr aufweist.

Diese Aufgabe wird bei einem gattungsgemäßen Verfahren erfindungsgemäß dadurch gelöst, daß es zumindest folgende Schritte umfaßt:
a) einen ersten Schritt, in dem der Mischung unter einem Druck, der über dem Partialdruck des in der Mischung enthaltenen Wassers liegt, Wärme zugeführt wird, und
b) einen zweiten Schritt, in dem die Mischung unter vermindertem Druck entspannt und dabei Wasser verdampft wird, wobei die Mischung bei der Zufuhr von Wärme eine Temperatur von 140°C nicht überschreitet und bei der Verdampfung des Wassers eine Temperatur von 50°C nicht unterschreitet.

"Zumindest" bedeutet in diesem Zusammenhang, daß im Gesamtablauf des Verfahrens von der Bereitung der Mischung bis zum Erhalt der fertigen Lösung die Schritte a) und b) mindestens einmal vorkommen können. Es können auch andere Verfahrensschritte durchgeführt werden, und die Schritte a) und b) können auch mehrfach einzeln oder in Kombination vorkommen.

Das erfindungsgemäße Verfahren ermöglicht nicht nur - wie bei dem gattungsgemäßen Verfahren - die Verdampfung der erforderlichen Wassermenge und die Phasenumwandlung der Cellulose von der festen in die flüssige Phase zur Herstellung der Lösung, sondern es bietet darüberhinaus die Möglichkeit, den Vorgang der Wärmezufuhr zu der die Cellulose, tertiäre Amin-N-oxide und Wasser enthaltenden Mischung vom Vorgang der Verdampfung des Wassers zu entkoppeln und die beiden Vorgänge einzeln zu optimieren.

In einer bevorzugten Ausführung des Verfahrens wird die Cellulose, tertiäre Amin-N-oxide und Wasser enthaltende Mischung im Schritt a) zunächst auf die gewünschte Temperatur erwärmt und - mittels eines Förder- und Druckerhöhungsorgans - auf einen Druck gebracht, der oberhalb des Partialdrucks des Wassers bei der gewünschten Temperatur sowie oberhalb des Entspannungsdrucks liegt, wobei das Förder- und Druckerhöhungsorgan gleichzeitig eine Strömung der Mischung durch die Zuführeinrichtungen zur Entspannungsstufe bewirkt.

Im Verfahrensschritt b) wird die erwärmte und unter Druck stehende Mischung in einer Entspannungseinheit auf einen Druck unterhalb des genannten Partialdruckes des in der erwärmten Mischung enthaltenen Wassers entspannt, so daß eine spontane Verdampfung von Wasser aus der Mischung einsetzt. Hierbei kühlt die Mischung gleichzeitig ab. Die Menge an verdampfendem Wasser ist abhängig von der Differenz zwischen dem Partialdruck des Wassers in der erwärmten Mischung und dem in der Entspannungseinheit eingestellten Druck. Die Temperatur der Mischung nach der Entspannungsverdampfung ergibt sich aus der Eintrittstemperatur der Mischung in die Entspannungseinheit und der Menge an verdampftem Wasser und ist somit auch von dem in der Entspannungseinheit eingestellten Druck abhängig.

Die im Wassergehalt reduzierte Mischung wird über ein geeignetes Förderorgan aus der Entspannungseinheit abgezogen und der weiteren Verarbeitung zugeführt. Der erzeugte Wasserdampf kann über Kopf abgezogen und kondensiert werden.

Die Wärmezufuhr im ersten Schritt des erfindungsgemässen Verfahrens kann auf verschiedene Weise erfolgen. So kann der Mischung z.B. über Wärmetauscher oder bei der Durchströmung der Zuleitungen zur Entspannungseinheit, die als beheizte Rohrleitungen ausgeführt sein können, die erforderliche Wärme zugeführt werden. Die Rohrleitungen können zur Verbesserung des Wärmetransports mit Mischelementen, vorzugsweise statischen Mischelementen ausgestattet sein.

Darüberhinaus können auch die eigentlichen Förder- und Druckerhöhungsorgane, die die Mischung der Entspannungseinheit zuführen, zur Wärmeübertragung dienen. Hier hat sich die Verwendung beheizbarer Pumpen, insbesondere zwangsfördernder beheizbarer Pumpen wie z.B. Exzenterschneckenpumpen oder Zahnradpumpen als vorteilhaft erwiesen. Auch beheizbare Extruder mit einer oder mehreren Schnecken können verwendet werden.

Letztlich kann die Wärmezufuhr auch über die Zuführeinrichtungen, über die die Mischung in die Entspannungseinheit eingebracht wird, erfolgen. Solche Zuführeinrichtungen können z.B. als beheizbare Düsen oder beheizbare Düsenplatten ausgeführt sein.

Mittels dieser genannten Maßnahmen ist die gewünschte gleichmäßige Erwärmung der Mischung innerhalb einer kurzen Zeitspanne unter Vermeidung von Überhitzungen möglich.

Im Hinblick auf eine effiziente Entspannungsverdampfung wird gemäß einer bevorzugten Ausführungsform des erfindungsgemäßen Verfahrens der Strom der der Entspannungseinheit zugeführten Mischung zur Erzeugung einer hohen spezifischen Oberfläche in eine Vielzahl kleinerer Teilströme unterteilt. Hierzu kann die Mischung z.B. durch mehrere Düsen oder durch Düsenplatten mit mehreren Düsenöffnungen in die Entspannungseinheit eingespritzt werden. Dabei sind die Düsen bzw. Düsenöffnungen vorzugsweise als Rundloch- oder Schlitzdüsen ausgeführt.

Weitere Anforderungen an die Ausführung der Düsen bzw. Düsenöffnungen sind vom Zustand abhängig, in dem sich die auszuspritzende Mischung befindet. Liegen Cellulose, tertiäre Amin-N-oxide und Wasser noch als Suspension vor, enthält die Mischung also noch Anteile ungelöster Cellulose, so ist bei der Auslegung der Querschnitte der Düsen bzw. Düsenöffnungen darauf zu achten, daß es nicht zu einer Verstopfung durch nicht gelöste Cellulose kommen kann. Gleichzeitig ist ein zu hoher Druckaufbau in der Düse zu vermeiden, da dieser zu einer Entmischung der Suspension im Düsenkanal führen kann. Je geringer der Anteil ungelöster Cellulose in der Mischung ist, desto geringer können die Austrittsquerschnitte der eingesetzten Düsen sein. Insgesamt hat es sich bestens bewährt, wenn die geringste Querschnittsabmessung der Düsenöffnung zwischen 0,1 und 10 mm, bevorzugt zwischen 0,5 und 5 mm liegt. Im Falle der vorteilhaften Verwendung von Rundlochdüsen ist diese geringste Querschnittsabmessung gleich dem Austrittsdurchmesser, bei der ebenfalls vorteilhaften Verwendung von Schlitzdüsen gleich der Schlitzbreite.

Die Länge des Düsenkanals der Düsen bzw. Düsenöffnungen richtet sich nach der Höhe des aufzubauenden Druckes vor der Entspannung, so daß auch ein vorzeitiges Verdampfen von Wasser aus der Mischung, d.h. ein Sieden der Mischung bereits im Düsenkanal vermieden wird. Wie erwähnt stellt andererseits die mögliche Entmischung einer noch ungelöste Cellulosebestandteile enthaltenden Mischung eine obere Grenze hinsichtlich des Druckaufbaus dar. Hierbei hat es sich zur Verringerung der Entmischungstendenz als vorteilhaft herausgestellt, wenn die Düsenkanäle konisch mit in Richtung auf den Düsenaustritt sich verjüngendem Querschnitt ausgeformt sind.

Die eigentliche Entspannungsverdampfung kann in jeder geeigneten Vorrichtung erfolgen. Bevorzugt besteht eine solche Vorrichtung aus einem Kolonnenschuß, der auch fördernde Einbauten zum Abtransport der im Wassergehalt reduzierten Mischung enthalten kann. In anderen bevorzugten Ausführungen kann die Entspannungsvorrichtung auch aus einem Kneter, wie z.B. einem evakuierbaren Trogkneter, oder auch einem Dünnschichtverdampfer bestehen, in die die Mischung direkt, z.B. über Düsen eingespritzt wird. Desweiteren ist in vorteilhafter Weise auch eine direkte Kopplung der Entspannungsvorrichtung mit einem Extruder, einem Dünnschichtverdampfer oder einer zwangsfördernden Pumpe mit Zuführorgan, wie z.B. einer Exzenterschneckenpumpe, möglich, wobei die Mischung beispielsweise in einen Vorraum dieser Apparate eingespritzt wird. Unter Vorräumen sind alle diejenigen Räume der vorgenannten Apparate zu verstehen, die aufgrund der Wirkung der jeweiligen Apparate unter reduziertem Druck stehen.

Der Raum, in dem die Entspannungsverdampfung erfolgt, ist zweckmäßigerweise so zu gestalten, daß es nicht zu Ablagerungen von Mischungsbestandteilen an Anlagenteilen kommen kann. Bei derartigen Ablagerungen besteht die Gefahr der unkontrollierten Verdampfung und gegebenenfalls der Austrocknung, woraus eine Kristallisation des Amin-N-oxids resultieren kann. Dies kann leicht zu einem Zuwachsen des Entspannungsraumes führen. Zur Vermeidung solcher Ablagerungen kann der Entspannungsraum etwa durch Schaber, die möglichst selbstreinigend ausgebildet sind, ständig gereinigt werden. Weitere Beispiele sind selbstreinigende Kneterschaufeln oder Transportschnecken. Eine weitere Maßnahme zur Vermeidung einer unkontrollierten Verdampfung von Wasser aus der Mischung ist eine geringe Verweilzeit der Mischung im Entspannungsraum, d.h. die im Wassergehalt reduzierte Mischung sollte möglichst umgehend nach der Entspannungsverdampfung aus dem Entspannungsraum ausgetragen werden.

Die in den einzelnen Schritten des erfindungsgemäßen Verfahrens einzustellenden Temperaturen und Drücke resultieren zum einen aus der aus der Mischung zu entfernenden Wassermenge. Zum anderen ergeben sich Randbedingungen aus Gründen maximal zulässiger Eigenschaftsänderungen der zu behandelnden Mischung. So ist einerseits eine möglichst hohe Differenz zwischen dem Partialdruck des Wassers in der der Entspannungseinheit zugeführten Mischung und dem in der Entspannungseinheit eingestellten Druck zur Maximierung der verdampften Wassermenge wünschenswert. Dies läßt sich zum einen durch eine hohe Eintrittstemperatur der Mischung in die Entspannungseinheit erreichen. Hier sind jedoch Grenzen durch den bei höheren Temperaturen verstärkt zu beobachtenden Abbau von Cellulose und tertiärem Amin-N-oxid gesetzt.

Zum anderen kann eine entsprechend hohe Druckdifferenz durch Reduzierung des Druckes in der Entspannungseinheit eingestellt werden. Die hierdurch erfolgende Maximierung der Menge an verdampftem Wasser kann jedoch zu einer zu starken Abkühlung der Mischung führen, so daß es zu einem Auskristallisieren des tertiären Amin-N-oxids kommen kann. Daher sollte das erfindungsgemäße Verfahren so durchgeführt werden, daß die Temperaturen der Cellulose, tertiäre Amin-N-oxide und Wasser enthaltenden Mischungen zwischen 50°C und 140°C, bevorzugt zwischen 60°C und 120°C liegen: Bei Erwärmung der Mischung sollte eine Temperatur von 140°C, bevorzugt 120°C nicht überschritten werden. Bei Wärmeentzug, also z.B. infolge der Verdampfung von Wasser, sollte dagegen eine Temperatur von 50°C, bevorzugt 60°C nicht unterschritten werden. Gegebenenfalls kann die Entspannungsvorrichtung beheizt werden, um diese Temperaturen zu halten.

Es hat sich bewährt, im Schritt a) des erfindungsgemäßen Verfahrens soviel Wärme zuzuführen, daß die Mischung vor der Entspannung auf eine Temperatur zwischen 80° und 140°C, bevorzugt zwischen 100° und 120°C aufgeheizt wird, wobei es sich bewährt hat, einen Druck zwischen 1 bar und 15 bar, bevorzugt zwischen 2 bar und 6 bar einzustellen. Im Schritt b) des erfindungsgemäßen Verfahrens sollte der Druck bevorzugt zwischen 20 mbar und 1000 mbar, besonders bevorzugt zwischen 50 mbar und 500 mbar liegen.

Das erfindungsgemäße Verfahren ist sowohl zur kontinuierlichen als auch zur diskontinuierlichen Herstellung von Celluloselösungen in wasserhaltigen tertiären Amin-N-oxiden geeignet. Bei der kontinuierlichen Herstellung wird die Cellulose, tertiäre Amin-N-oxide und Wasser enthaltene Mischung z.B. aus einem Vorlagebehälter als Feed-Strom kontinuierlich unter Erwärmung und unter Druck in die Entspannungseinheit eingespritzt und die im Wassergehalt reduzierte Mischung als Produktstrom kontinuierlich aus der Entspannungseinheit abgezogen, um der weiteren Verarbeitung zugeführt zu werden. In der Regel genügt unter Berücksichtigung der Randbedingungen hinsichtlich der anwendbaren Temperaturen und Druckdifferenzen der einmalige Durchgang durch eine Entspannungseinheit nicht, um die erforderliche Menge an Wasser zu entfernen und die Mischung aus dem Zustand einer Suspension in den einer Lösung zu überführen.

Dies kann bei dem erfindungsgemäßen Verfahren durch einfaches Hintereinanderschalten mehrerer dieser Entspannungseinheiten als Stufen erreicht werden. Zwischen zumindest einem Teil dieser Stufen kann dabei die Mischung durch Zwischenaufheizung auf die jeweils gewünschte Temperatur erwärmt und durch entsprechende Förder- und Druckerhöhungsorgane auf den jeweils erforderlichen Druck vor der Entspannung gebracht werden. Dabei kann die Mischung zur Unterstützung des Lösevorgangs vorteilhaft definierten Scherbeanspruchungen unterworfen werden. Solche Scherbeanspruchungen können z.B. durch eine geeignete Auswahl der Förder- und. Druckerhöhungsorgane und/oder durch den Einbau von vorzugsweise statischen und/oder dynamischen Mischelementen in zumindest einen Teil der zwischen den einzelnen Stufen befindlichen Transportleitungen erzielt werden. Derartige Mischelemente können gleichzeitig zur Verbesserung der Wärmezufuhr zum Aufheizen der Mischung und/oder zur Erhöhung des Druckes vor der Entspannung dienen.

Die Anzahl der Stufen ergibt sich aus der Menge an abzutrennendem Wasser sowie den minimal und maximal zulässigen Temperaturen für die Mischung. Hierbei können die in den jeweiligen Stufen eingestellten Prozeßbedingungen unterschiedlich sein. Z.B. ist es zweckmäßig, daß in den ersten Stufen eine hohe Differenz zwischen dem Partialdruck des Wassers in dem in die jeweilige Stufe eintretenden Mischungsstrom und dem Druck in der jeweiligen Entspannungseinheit eingestellt wird, um große Mengen an Wasser aus der Mischung zu entfernen. In der letzten Stufe wird dann eine geringere Druckdifferenz eingestellt, die auf die Restmenge an noch zu entfernendem Wasser und auf die gezielte Einstellung des Wassergehaltes der fertigen Celluloselösung abgestimmt ist.

Der Wassergehalt der fertigen Lösung kann dabei entweder on-line z.B. mittels IR-Absorptionsmessung oder off-line z.B. mittels eines Refraktometers gemessen werden und als Steuergröße für den Druck in der letzten Entspannungsstufe dienen. Hierdurch ist eine genaue und konstante Einstellung des Wassergehaltes der Celluloselösung möglich.

Das erfindungsgemäße Verfahren läßt sich auch in beliebiger Weise mit anderen Verfahren zur Herstellung von Celluloselösungen in wasserhaltigen tertiären Amin-N-oxiden kombinieren. So ist es z.B. möglich, anstelle der letzten Entspannungseinheit bei einem mehrstufigen Entspannungsverdampfungsprozeß einen Extruder, bevorzugt einen Entgasungsextruder einzusetzen.

Gemäß einer weiteren bevorzugten Ausgestaltung des erfindungsgemäßen Verfahrens wird die nach einem beispielsweise mehrstufigen Entspannungsverdampfungsprozeß erhaltene Celluloselösung einer Behandlung in einem Dünnschichtverdampfer wie z.B. einem Filmtruder (eingetr. Warenzeichen der Fa. Buss AG in Pratteln, Schweiz) unterzogen. Hierdurch kann auf vorteilhafte Weise eine Feineinstellung des endgültigen Wassergehalts der Celluloselösung, verbunden mit einer effizienten Entgasung der Lösung vorgenommen werden. In ähnlicher Weise ist es auch möglich, die Mischung in einem Zustand, in dem die Cellulose noch nicht vollständig in Lösung gegangen ist, dem Entspannungsverdampfungsprozeß zu entnehmen und das vollständige Lösen der Cellulose sowie die Feineinstellung des geforderten Wassergehalts und die Entgasung im genannten Dünnschichtverdampfer vorzunehmen. Hierbei kann der Dünnschichtverdampfer im Prinzip in einer Weise betrieben werden, wie sie z.B. in der EP-A-356 419 beschrieben wird.

Gemäß einer weiteren vorteilhaften Ausgestaltung des erfindungsgemäßen Verfahrens kann auch wenigstens ein Teil der aus der Entspannungseinheit abgeführten Mischung rezirkuliert werden. Der Kreislaufstrom wird mittels einer Förder- und Druckerhöhungsvorrichtung gegebenenfalls zusammen mit dem kontinuierlich zugeführten Feed-Strom wieder in die Entspannungseinheit zurückgeführt. Dabei kann der Kreislaufstrom vor der Zuführung in die Entspannungseinheit erwärmt werden und durch statische und/oder dynamische Mischelemente im Kreislauf einer Scherbeanspruchung zur Verbesserung des Löseverhaltens unterworfen werden. Der kontinuierlich der Entspannungseinheit entnommene Produktstrom kann'z.B. als Feed-Strom in eine weitere Entspannungsstufe eingeleitet werden.

Der Spezialfall, daß der gesamte der Entspannungseinheit entnommene Produktstrom im Kreislauf rezirkuliert wird, stellt eine diskontinuierliche Fahrweise des erfindungsgemäßen Verfahrens dar. Hierbei wird eine der Kapazität der Entspannungsstufe entsprechende Menge an als Suspension vorliegender, Cellulose, tertiäre Amin-N-oxide und Wasser im Überschuß enthaltender Mischung aufgegeben und durch die Entspannungsstufe geführt. Die im Wassergehalt reduzierte, am Ausgang der Entspannungseinheit abgezogene Mischung wird solange vollständig im Kreislauf zurückgeführt, bis der erforderliche Wasserendgehalt der Celluloselösung erreicht ist und eine homogene Lösung der Cellulose im wasserhaltigen Amin-N-oxid vorliegt. Währenddessen wird das verdampfte Wasser kontinuierlich über Kopf abgezogen. Nach Vorliegen der homogenen Celluloselösung wird diese der Entspannungseinheit entnommen und der weiteren Verarbeitung zugeführt.

Diese Ausführungen machen deutlich, daß das erfindungsgemäße Verfahren die flexible Anpassung an verschiedene Anforderungen des Prozesses zur Herstellung von Celluloselösungen in wasserhaltigen tertiären Amin-N-oxiden ermöglicht. Darüberhinaus zeichnet es sich durch einen einfachen Aufbau der verwendeten Apparate aus. Das Fehlen komplexer Bauteile resultiert in vergleichsweise geringen Gestehungs- und Wartungskosten. Auch ein Scale-Up auf größere Produktionsmengen ist einfach durchführbar.

Das erfindungsgemäße Verfahren zeichnet sich außerdem durch eine hohe Variabilität hinsichtlich der Cellulose, tertiäre Amin-N-oxide und Wasser enthaltenden Mischungen aus. So lassen sich Celluloselösungen bis zu 30 Gew.% Cellulose herstellen.

Die in der Mischung enthaltene Cellulose kann aus Cellulose selbst bestehen, es kann sich jedoch auch um modifizierte oder substituierte Cellulose handeln, deren Eigenschaften im Hinblick aus das gewünschte Eigenschaftsprofil der daraus hergestellten Produkte gezielt verändert wurden. Auch Mischungen von Cellulose mit modifizierter oder substituierter Cellulose können eingesetzt werden.

Jedes tertiäre Amin-N-oxid, das gegenüber Wasser stabil ist, kann als Löser eingesetzt werden. Verschiedene geeignete tertiäre Amin-N-oxide werden z.B. in der eingangs erwähnten US-A-4 246 221 aufgeführt. Bevorzugt wird als Löser jedoch N-Methyl-morpholin-N-oxid (NMMO) eingesetzt.

Der Mischung können auch Zusätze beigemischt werden. Derartige Zusätze können z.B. viskositätsbeeinflussende Zusätze, Stabilisatoren und/oder Weichmacher sein. Als Stabilisator hat sich beispielsweise Gallussäure-Propylester bewährt. Als weitere Zusätze können auch Farbstoffe, Mattierungsmittel wie z.B. TiO₂ oder anorganische und/oder organische Salze beigemischt werden, um bestimmte Eigenschaften der letztlich aus den Cellulose, tertiäre Amin-N-oxide und Wasser enthaltenden Mischungen hergestellten Produkte einzustellen.

Die Erfindung wird anhand der nachfolgenden Zeichnungen und Beispiele näher erläutert. Hierbei zeigt
- Fig. 1: schematisch die Ansicht einer für die diskontinuierliche Fahrweise des erfindungsgemäßen Verfahrens geeigneten Vorrichtung
- Fig. 2: schematisch die Ansicht einer für die kontinuierliche Fahrweise des erfindungsgemäßen Verfahrens geeigneten Vorrichtung

### Beispiel 1:

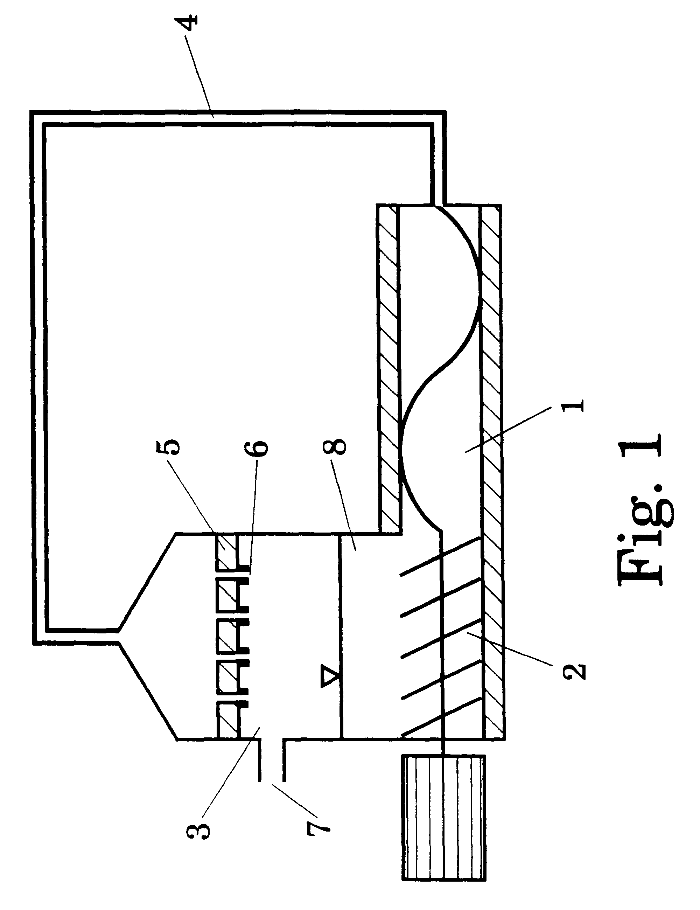

In einer aus einer beheizbaren Exzenterschneckenpumpe 1 mit Zuführschnecke 2, einem beheizbaren Entspannungsgefäß 3 und einer beheizbaren Rohrleitung 4 sowie einer beheizbaren Düsenplatte 5 bestehenden Vorrichtung, wie sie in Fig. 1 schematisch dargestellt ist, wird diskontinuierlich eine Celluloselösung in wasserhaltigem tertiären Amin-N-oxid hergestellt. Die Düsenplatte 5 hat vier zylindrische Einschraubdüsen 6, die als Rundlochdüsen ausgeführt sind. Der Austrittsdurchmesser der Düsen beträgt am Anfang des Versuches 6 mm. Während des Übergangs der verwendeten, Cellulose, tertiäres Amin-N-oxid und Wasser enthaltenden Mischung von der Suspension zur Lösung werden diese Düsen gegen solche mit einem Austrittsdurchmesser von 3 mm ausgetauscht. Die Länge des Düsenkanals beträgt in beiden Fällen 5 mm. Sowohl die Pumpe 1 als auch die Rohrleitung 4 einschließlich der Düsenplatte 5 wird auf 110°C temperiert. Das Entspannungsgefäß 3 wird über den Vakuumanschluß 7 evakuiert; der Druck im Enspannungsgefäß beträgt ca. 120 mbar. Das Entspannungsgefäß, das auch gleichzeitig als Vorlagebehälter dient, hat ein Volumen von ca. 2,5 l.

Im unteren Bereich 8 des Entspannungsgefäßes 3 werden ca 900 g einer Mischung mit 13 Gew.% Cellulose mit einem Polymerisationsgrad DP von ca. 700 sowie ca. 87 Gew.% eines Gemisches aus N-Methyl-morpholin-N-oxid (NMMO) und Wasser mit einem Wassergehalt von ca. 23 Gew.% vorgelegt und mit 0,14 Gew.% Gallussäure-Propylester stabilisiert.

Die Mischung wird mittels der Exzenterschneckenpumpe 1 umgewälzt, dabei wird fortlaufend das verdampfende Wasser über den Vakuumanschluß 7 abgezogen.

Nach ca. 2 Stunden ist die Cellulose vollständig gelöst, es können keine ungelösten Celluloseteilchen mehr beobachtet werden. Der Wassergehalt der Spinnlösung beträgt 10,2 Gew.%.

### Beispiel 2:

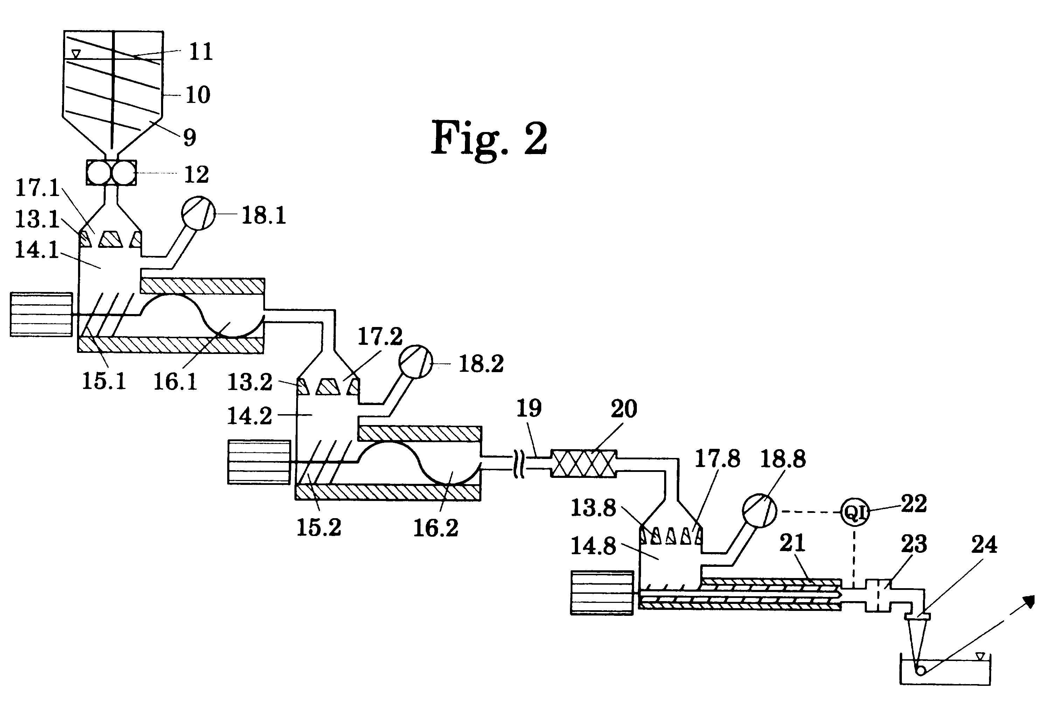

Die kontinuierliche Herstellung erfolgt in einer mehrstufigen Entspannungsverdampfungsanlage, wie in Fig. 2 schematisch dargestellt. Die Cellulose, NMMO und Wasser enthaltende Mischung 9 gemäß Beispiel 1 wird aus einem beheizten Vorlagegefäß 10, das auf 80°C beheizt ist, mittels einer Förderschnecke 11 in eine auf 120°C beheizte Zahnradpumpe 12 gefördert. Die Zahnradpumpe 12 drückt ca. 850 g/h der Mischung in die erste Entspannungsstufe.

Diese erste Entspannungsstufe besteht aus einer beheizten Düsenplatte 13.1, dem Entspannungsraum 14.1 mit Zuführschnecke 15.1 und einer anschließenden Verdichterstufe 16.1. Die Düsenplatte 13.1 ist auf 120°C beheizt. In der Düsenplatte befinden sich zehn Rundlochdüsen 17.1 mit konisch ausgebildetem Düsenkanal. Die Rundlochdüsen haben eine Kanallänge von 10 mm und einen Austrittsdurchmesser von 6 mm. Die Düsenaustrittsöffnungen befinden sich im ersten Entspannungsraum 14.1, der aus der Einzugszone einer als Verdichter eingesetzten Exzenterschnekkenpumpe 16.1 besteht. Der Druck im Entspannungsraum 14.1 beträgt 100 mbar und wird über eine Vakuumeinheit 18.1 konstant gehalten. Die auf 110°C beheizte Exzenterschneckenpumpe fördert die in ihrem Wassergehalt gegenüber dem Eintrittszustand reduzierte Mischung nach der Entspannung zur nachfolgenden zweiten Entspannungsstufe.

Die zweite Entspannungsstufe besteht aus denselben Anlagenteilen wie die erste Entspannungsstufe. Die Anlagenteile werden daher mit 13.2, 14.2, 15.2, 16.2, 17.2, 18.2 bezeichnet, wobei gleiche Ziffern vor dem Punkt auch gleiche Anlagenteile in den Entspannungsstufen bedeuten und die Ziffer hinter dem Punkt die jeweilige Entspannungsstufe angibt.

Die der zweiten Entspannungsstufe nachfolgenden Entspannungsstufen drei bis sieben sind identisch zur zweiten Entspannungsstufe und daher in der Fig. 2 aus Gründen der Übersichtlichkeit nicht dargestellt.

Die Entspannungsstufen eins bis sieben unterscheiden sich gemäß diesem Beispiel lediglich durch die Anzahl und den Durchmesser der eingesetzten Rundlochdüsen und dem jeweils eingestellten Druck, wie in Tab. 1 angegeben.

**Tabelle 1**

| Entspannungsstufe | 1 | 2 | 3 | 4 | 5 | 6 | 7 | 8 |
|---|---|---|---|---|---|---|---|---|
| Anzahl der Düsen | 10 | 10 | 15 | 15 | 24 | 40 | 40 | 40 |
| Düsendurchmesser [mm] | 6 | 6 | 5 | 5 | 4 | 3 | 2 | 1,5 |
| Druck [mbar] | 100 | 100 | 80 | 80 | 50 | 50 | 50 | ca. 300 |

Die Mischung wird nach der Entspannung und Verdichtung in der siebten Entspannungsstufe durch die Rohrleitung 19 und einen statischen Mischer 20 zur Feineinstellung des Wassergehaltes sowie zur Fertigstellung der homogenen Celluloselösung einer weiteren, der achten Entspannungsstufe zugeführt. Die Düsenplatte 13.8 dieser Stufe hat 40 zylindrische Rundlochdüsen mit einem Austrittsdurchmesser von 1,5 mm und einer Länge von 6 mm. Sie ist ebenfalls auf 120°C beheizt. Der Druck im letzten Entspannungsraum 14.8, der gleichzeitig der Einzugsbereich eines Einschneckenextruders 21 ist, beträgt in der Größenordnung von 300 mbar. Er wird über den Wassergehalt der ausgetragenen Celluloselösung geregelt, welcher on-line 22 mittel IR-Absorption gemessen wird. Im Extruder findet auch eine letzte Entgasung der Lösung statt.

Die Lösung konnte nach einer anschließenden Filtrierung 23 problemlos über geeignete Düsen 24 zu textilen Fäden versponnen werden.

## Patentansprüche

1. Verfahren zur Herstellung einer Lösung von Cellulose in wasserhaltigen tertiären Amin-N-oxiden durch Bereiten einer Cellulose, Wasser und tertiäre Amin-N-oxide enthaltenden Mischung und anschließende Verringerung des Wassergehalts dieser Mischung, dadurch gekennzeichnet, daß es zumindest folgende Schritte umfaßt:
a) einen ersten Schritt, in dem die Mischung unter einem Druck, der über dem Partialdruck des in der Mischung enthaltenen Wassers liegt, Wärme zugeführt wird, und
b) einen zweiten Schritt, in dem die Mischung unter einem verminderten Druck entspannt und dabei Wasser verdampft wird,
wobei die Mischung bei der Zufuhr von Wärme eine Temperatur von 140°C nicht überschreitet und bei der Verdampfung des Wassers eine Temperatur von 50°C nicht unterschreitet.

2. Verfahren nach Anspruch 1, dadurch gekennzeichnet, daß die Mischung in mehreren Teilströmen dem Schritt b), dem Entspannungsschritt, zugeführt wird.

3. Verfahren nach Anspruch 2, dadurch gekennzeichnet, daß die Teilströme dem Entspannungsschritt über Düsen zugeführt werden.

4. Verfahren nach Anspruch 3, dadurch gekennzeichnet, daß Düsen eingesetzt werden, deren geringste Querschnittsabmessung zwischen 0,1 und 10 mm liegt.

5. Verfahren nach Anspruch 4, dadurch gekennzeichnet, daß die geringste Querschnittsabmessung zwischen 0,5 und 5 mm liegt.

6. Verfahren nach einem oder mehreren der Ansprüche 3 bis 5, dadurch gekennzeichnet, daß Rundloch- oder Schlitzdüsen eingesetzt werden.

7. Verfahren nach einem oder mehreren der Ansprüche 3 bis 6, dadurch gekennzeichnet, daß die Düsen einen Kanal mit konischer Kontur aufweisen, wobei sich der Kanalquerschnitt in Richtung auf den Düsenaustritt verjüngt.

8. Verfahren nach einem oder mehreren der Ansprüche 1 bis 7, dadurch gekennzeichnet, daß die Entspannung in einem Kolonnenschuß erfolgt.

9. Verfahren nach einem oder mehreren der Ansprüche 1 bis 7, dadurch gekennzeichnet, daß die Entspannung im Vorraum einer zwangsfördernden Pumpe mit Zuführorgan erfolgt.

10. Verfahren nach einem oder mehreren der Ansprüche 1 bis 9, dadurch gekennzeichnet, daß im Schritt a) die Mischung auf eine Temperatur zwischen 80°C und 140°C aufgeheizt wird.

11. Verfahren nach Anspruch 10, dadurch gekennzeichnet, daß im Schritt a) die Mischung auf eine Temperatur zwischen 100°C und 120°C aufgeheizt wird.

12. Verfahren nach Anspruch 10 oder 11, dadurch gekennzeichnet, daß die Mischung vor der Entspannung auf einen Druck zwischen 1 bar und 15 bar gebracht wird.

13. Verfahren nach Anspruch 12, dadurch gekennzeichnet, daß die Mischung vor der Entspannung auf einen Druck zwischen 2 bar und 6 bar gebracht wird.

14. Verfahren nach einem oder mehreren der Anprüche 1 bis 13, dadurch gekennzeichnet, daß die Mischung im Schritt b) auf einen Druck zwischen 20 mbar und 1000 mbar entspannt wird.

15. Verfahren nach Anspruch 14, dadurch gekennzeichnet, daß die Mischung im Schritt b) auf einen Druck zwischen 50 mbar und 500 mbar entspannt wird.

16. Verfahren nach einem oder mehreren der Ansprüche 1 bis 15, dadurch gekennzeichnet, daß alle Schritte so ausgeführt werden, daß die Temperatur der Mischung nicht unter 50°C absinkt.

17. Verfahren nach Anspruch 16, dadurch gekennzeichnet, daß alle Schritte so ausgeführt werden, daß die Temperatur der Mischung nicht unter 60°C absinkt.

18. Verfahren nach einem oder mehreren der Ansprüche 1 bis 17, dadurch gekennzeichnet, daß wenigstens für einen Teil der Mischung Schritt a) und/oder Schritt b) mehrfach durchgeführt wird.

19. Verfahren nach einem oder mehreren der Ansprüche 1 bis 18, dadurch gekennzeichnet, daß die Mischung einer Scherung unterworfen wird.

20. Verfahren nach Anspruch 19, dadurch gekennzeichnet, daß die Scherung in statischen Mischelementen erfolgt.

21. Verfahren nach einem oder mehreren der Ansprüche 1 bis 20, dadurch gekennzeichnet, daß die Mischung in einem oder mehreren Verfahrensschritten in einem Extruder behandelt wird.

22. Verfahren nach einem oder mehreren der Ansprüche 1 bis 20, dadurch gekennzeichnet, daß die Mischung in einem oder mehreren Verfahrensschritten in einem Dünnschichtverdampfer behandelt wird.

23. Verfahren nach einem oder mehreren der Ansprüche 1 bis 22, dadurch gekennzeichnet, daß als tertiäres Amin-N-oxid N-Methyl-morpholin-N-oxid eingesetzt wird.

## Claims

1. Process for preparing a solution of cellulose in water-containing tertiary amine N-oxides via preparation of a mixture containing cellulose, tertiary amine N-oxides and water and subsequent reduction of the water content of this mixture, characterized in that it includes at least the following steps:
a) a first step in which heat is applied to the mixture which is subjected to a pressure higher than the partial pressure of the water contained in the mixture, and
b) a second step in which the mixture is subjected to flash evaporation under reduced pressure, whereby water is evaporated,
whereby the temperature of the mixture does not exceed 140°C when heat is applied and does not fall below 50°C when water is evaporated.

2. Process according to Claim 1, characterized in that the mixture is fed in several split streams into step b), the flashing step.

3. Process according to Claim 2, characterized in that the split streams are fed into the flashing step via nozzles.

4. Process according to Claim 3, characterized in that nozzles are employed whose smallest cross-section dimension ranges between 0.1 and 10 mm.

5. Process according to Claim 4, characterized in that the smallest cross-section dimension ranges between 0.5 and 5 mm.

6. Process according to one or more of Claims 3 to 5, characterized in that round-hole or slit nozzles are employed.

7. Process according to one or more of Claims 3 to 6, characterized in that the nozzles exhibit a conically contoured channel, whereby the channel cross section is tapered towards the nozzle exit.

8. Process according to one or more of Claims 1 to 7, characterized in that the flashing takes place in a column section or course.

9. Process according to one or more of Claims 1 to 7, characterized in that the flashing takes place in the antechamber of a forced-conveyance pump with feeding tool.

10. Process according to one or more of Claims 1 to 9, characterized in that in step a) the mixture is heated to a temperature between 80°C and 140°C.

11. Process according to Claim 10, characterized in that in step a) the mixture is heated to a temperature between 100°C and 120°C.

12. Process according to Claim 10 or 11, characterized in that before flashing the mixture is put under a pressure between 1 bar and 15 bar.

13. Process according to Claim 12, characterized in that before flashing the mixture is put under a pressure between 2 bar and 6 bar.

14. Process according to one or more of Claims 1 to 13, characterized in that the mixture is in step b) subjected to flashing to a pressure between 20 mbar and 1000 mbar.

15. Process according to Claim 14, characterized in that the mixture is in step b) subjected to flashing to a pressure between 50 mbar and 500 mbar.

16. Process according to one or more of Claims 1 to 15, characterized in that all steps are carried out so that the temperature of the mixture does not fall below 50°C.

17. Process according to Claim 16, characterized in that all steps are carried out so that the temperature of the mixture does not fall below 60°C.

18. Process according to one or more of Claims 1 to 17, characterized in that at least for a part of the mixture step a) and/or step b) is/are carried out multiple times.

19. Process according to one or more of Claims 1 to 18, characterized in that the mixture is subjected to shearing.

20. Process according to Claim 19, characterized in that the shearing takes place in static mixing elements.

21. Process according to one or more of Claims 1 to 20, characterized in that the mixture is treated in one or several process steps in an extruder.

22. Process according to one or more of Claims 1 to 20, characterized in that the mixture is treated in one or several process steps in a thin-film evaporator.

23. Process according to one or more of Claims 1 to 22, characterized in that N-methylmorpholine-N-oxide is employed as a tertiary amine N-oxide.

## Revendications

1. Procédé de fabrication d'une solution de cellulose dans des amines tertiaires N-oxydées contenant de l'eau, par préparation d'un mélange contenant de la cellulose, de l'eau et des amines tertiaires N-oxydées, puis réduction de la teneur en eau de ce mélange, caractérisé par le fait qu'il comprend au moins les étapes suivantes :
a) une première étape dans laquelle on apporte au mélange de la chaleur sous une pression qui est supérieure à la pression partielle de l'eau contenue dans le mélange, et
b) une deuxième étape dans laquelle le mélange est détendu sous une pression réduite ce qui entraîne une évaporation d'eau,
la température dudit mélange n'excédant pas 140 °C lors de l'apport de chaleur et n'étant à aucun moment inférieure à 50 °C lors de l'évaporation d'eau.

2. Procédé selon la revendication 1, caractérisé par le fait que le mélange arrive sous forme de plusieurs flux partiels à l'étape b), c'est-à-dire à l'étape de détente.

3. Procédé selon la revendication 2, caractérisé par le fait que les flux partiels arrivent à l'étape de détente par des buses.

4. Procédé selon la revendication 3, caractérisé par le fait que l'on utilise des buses dont la plus petite dimension en section transversale est comprise entre 0,1 et 10 mm.

5. Procédé selon la revendication 4, caractérisé par le fait que la plus petite dimension en section transversale est comprise entre 0,5 et 5 mm.

6. Procédé selon une ou plusieurs des revendication 3 à 5, caractérisé par le fait que l'on utilise des buses à trou rond ou à fente.

7. Procédé selon une ou plusieurs des revendications 3 à 6, caractérisé par le fait que les buses présentent un canal ayant un contour conique, la section transversale du canal diminuant en direction de l'ouverture de sortie de la buse.

8. Procédé selon une ou plusieurs des revendications 1 à 7, caractérisé par le fait que la détente se fait dans un tronçon de colonne.

9. Procédé selon une ou plusieurs des revendications 1 à 7, caractérisé par le fait que la détente se fait à l'entrée d'une pompe de refoulement munie d'un dispositif d'alimentation.

10. Procédé selon une ou plusieurs des revendications 1 à 9, caractérisé par le fait que le mélange est chauffé dans l'étape a) à une température comprise entre 80 et 140 °C.

11. Procédé selon la revendication 10, caractérisé par le fait que le mélange est chauffé dans l'étape a) à une température comprise entre 100 et 120 °C.

12. Procédé selon la revendication 10 ou 11, caractérisé par le fait que le mélange est soumis, avant la détente, à une pression comprise entre 1 bar et 15 bar.

13. Procédé selon la revendication 12, caractérisé par le fait que le mélange est soumis, avant la détente, à une pression comprise entre 2 bar et 6 bar.

14. Procédé selon une ou plusieurs des revendications 1 à 13, caractérisé par le fait que le mélange est détendu dans l'étape b) à une pression comprise entre 20 mbar et 1000 mbar.

15. Procédé selon la revendication 14, caractérisé par le fait que le mélange est détendu dans l'étape b) à une pression comprise entre 50 et 500 mbar.

16. Procédé selon une ou plusieurs des revendications 1 à 15, caractérisé par le fait que toutes les étapes sont réalisées de manière à ce que la température du mélange ne soit à aucun moment inférieure à 50 °C.

17. Procédé selon la revendication 16, caractérisé par le fait que toutes les étapes sont réalisées de manière à ce que la température du mélange ne soit à aucun moment inférieure à 60 °C.

18. Procédé selon une ou plusieurs des revendications 1 à 17, caractérisé par le fait que, pour au moins une partie du mélange, l'étape a) et/ou l'étape b) sont répétées plusieurs fois.

19. Procédé selon une ou plusieurs des revendications 1 à 18, caractérisé par le fait que le mélange est soumis à un cisaillement.

20. Procédé selon la revendication 19, caractérisé par le fait que le cisaillement a lieu dans des éléments de mélange statiques.

21. Procédé selon une ou plusieurs des revendications 1 à 20, caractérisé par le fait que le mélange est traité, dans une ou plusieurs étapes de procédé, dans une extrudeuse.

22. Procédé selon une ou plusieurs des revendications 1 à 20, caractérisé par le fait que le mélange est traité, dans une ou plusieurs étapes de procédé, dans un évaporateur à couche mince.

23. Procédé selon une ou plusieurs des revendications 1 à 22, caractérisé par le fait que l'on utilise comme amine tertiaire N-oxydée du N-méthylmorpholine-N-oxyde.
